(19) Europäisches Patentamt
European Patent Office
Office européen des brevets

(11) Veröffentlichungsnummer: **0 017 804**
**A1**

(12) # EUROPÄISCHE PATENTANMELDUNG

(21) Anmeldenummer: **80101554.6**

(22) Anmeldetag: **25.03.80**

(51) Int. Cl.³: **C 08 G 18/38,** C 08 G 18/20, C 08 G 18/66, C 08 G 18/75

(30) Priorität: **07.04.79 DE 2914134**

(43) Veröffentlichungstag der Anmeldung: **29.10.80 Patentblatt 80/22**

(84) Benannte Vertragsstaaten: **BE DE FR GB IT**

(71) Anmelder: **BAYER AG, Zentralbereich Patente, Marken und Lizenzen, D-5090 Leverkusen 1, Bayerwerk (DE)**

(72) Erfinder: **Meyborg, Holger, Dr., Bergstrasse 92, D-5068 Odenthal (DE)**
Erfinder: **Mormann, Werner, Dr., Odenthaler Strasse 62, D-5090 Leverkusen (DE)**
Erfinder: **Illger, Hans-Walter, Dr., Im Tentefeld 27, D-5064 Rösrath (DE)**
Erfinder: **Bock, Manfred, Dr., Haydnstrasse 18, D-5090 Leverkusen (DE)**

(54) **Verfahren zur Herstellung von Polyurethan-Schaumstoffen.**

(57) Verfahren zur Herstellung von Polyurethan-Schaumstoffen durch Umsetzung von Polyisocyanaten mit Polyhydroxylverbindungen vom Molekulargewicht 400 bis 10 000 in Gegenwart von Treibmitteln und Kettenverlängerern vom Molekulargewicht 32 bis 400, sowie gegebenenfalls in Gegenwart von Aktivatoren, Schaumstabilisatoren und weiteren an sich bekannten Hilfs- und Zusatzstoffen, dadurch gekennzeichnet, dass als Polyisocyanate solche mit aliphatisch und/oder cycloaliphatisch gebundenen Isocyanatgruppen, als Polyhydroxylverbindungen vom Molekulargewicht 400 bis 10 000 ehtergruppenhaltige Polyole und als Kettenverlängerer neben den an sich bekannten Kettenverlängerern mono- und/oder dialkoxyliertes Hydrazin und/oder Umsetzungsprodukte von mono- und/oder dialkoxyliertem Hydrazin mit aliphatischen Monoisocyanaten im Molverhältnis 1 : 1 eingesetzt werden.

**EP 0 017 804 A1**

0017804

BAYER AKTIENGESELLSCHAFT 5090 Leverkusen, Bayerwerk

Zentralbereich
Patente, Marken und Lizenzen GM/AB

Verfahren zur Herstellung von Polyurethan-Schaumstoffen

Die vorliegende Erfindung betrifft ein neues Verfahren zur Herstellung von witterungsbeständigen, insbesondere heißluftalterungs- und UV-beständigen Polyurethan-Schaumstoffen, insbesondere solchen mit einer integralen Haut (Integralschaumstoffen).

Polyurethan-Integralschaumstoffe, wie sie gemäß der Methode der Formverschäumung (vgl. z.B. DE.AS 1 196 864, 1 694 138 und FR-PS 1 559 325) erhalten werden, eignen sich vorzüglich für die Serienherstellung von Leichtbaukonstruktionen, z.B. für den Möbel-, Fahrzeug und Hausbau, bzw. von elastischen Formteilen wie Kissen, Stoßdämpfer und Schuhsohlen.

Die bisher im Markt angebotenen weichen, halbharten und harten Polyurethanschaumstoff-Formteile basieren

in der Regel auf der Vernetzung von aromatischen Polyisocyanaten mit Polyether- bzw. Polyesterpolyolen, gegebenenfalls in Kombination mit bekannten Kettenverlängerern und Vernetzungsmitteln. Derartige Formkörper weisen ein hohes mechanisches Werteniveau auf, das sie für viele der bereits erwähnten Anwendungen geeignet macht.

Ein Nachteil all dieser Formteile ist es, daß sie durch Bewitterung vergilben und zusätzlich in der Oberfläche durch chemischen Aufbau aufrauhen, so daß z.B. Formteile für erhöhte Ansprüche in der Regel mit einer schützenden Lackschicht versehen werden müssen.

Die Verfärbung von Polyurethanen unter dem Einfluß von Licht ist bekannt, und tritt insbesondere dann auf, wenn aromatische Polyisocyanate verwendet werden. Deshalb sind in neuerer Zeit Versuche unternommen worden, Polyurethan-Schaumstoffe mit und ohne Integralhaut auf Basis aliphatischer Polyisocyanate herzustellen. Im Vordergrund dieser Untersuchungen (vgl. z.B. DE-OS 2 710 901) stand allerdings dabei oft die Entwicklung einer geeigneten Katalysatorkombination. Die dabei resultierenden Schaumstoffe sind zwar wesentlich lichtstabiler als bisher bekannte, verfärben sich aber dennoch nach längerer UV-Belichtung, so daß ein Zusatz von Antioxidantien und UV-Absorbern bei erhöhten Ansprüchen an die Lichtbeständigkeit des Materials nötig ist.

Ein ausgesprochener Nachteil der Schaumstoffe auf Basis

von aliphatischen Polyisocyanaten ist ihre im Vergleich mit herkömmlichen Polyurethanen auf Basis aromatischer Polyisocyanate sehr viel größere Thermooxidationsanfälligkeit, die gleichfalls einen Zusatz von Antioxidantien erforderlich macht.

Gegenstand der vorliegenden Erfindung ist deshalb ein Verfahren zur Herstellung von Polyurethan-Schaumstoffen, bevorzugt mit Integralhaut, die auch ohne Zusatz von Antioxidantien und UV-Absorbern erhöhten Ansprüchen an die UV-Beständigkeit genügen und gleichzeitig thermooxidativ ausreichend stabil sind. Unter erhöhten Ansprüchen an die UV-Beständigkeit wird dabei verstanden, daß das Material nach mind. 500 h im Xenontest praktisch unverändert ist, unter ausreichender Thermooxidationsstabilität eine Lagerzeit von 72 h bei 110°C aufweist, ohne daß das Material unbrauchbar wird.

Gegenstand der vorliegenden Erfindung ist ein Verfahren zur Herstellung von Polyurethan-Schaumstoffen durch Umsetzung von Polyisocyanaten mit Polyhydroxylverbindungen von Molekulargewicht 400bis 10000 in Gegenwart von Treibmitteln und Kettenverlängerern vom Molekulargewicht 32 bis 400, sowie gegebenenfalls in Gegenwart von Aktivatoren, Schaumstabilisatoren und weiteren an sich bekannten Hilfs- und Zusatzstoffen, dadurch gekennzeichnet, daß als Polyisocyanate solche mit aliphatisch und/oder cycloaliphatisch gebundenen Isocyanatgruppen, als Polyhydroxylverbindungen vom

Molekulargewicht 400 - 10000 ethergruppenhaltige Polyole und als Kettenverlängerer neben an sich bekannten Kettenverlängerern mono- und/oder dialkoxyliertes Hydrazin und/oder Umsetzungsprodukte von mono- und/oder dialkoxyliertem Hydrazin mit aliphatischen Monoisocyanaten im Molverhältnis 1:1 eingesetzt werden.

Beim erfindungsgemäßen Verfahren werden als organische Polyisocyanate solche mit aliphatisch und/oder cycloaliphatisch gebundenen Isocyanatgruppen eingesetzt, d.h. aliphatische, cycloaliphatische oder araliphatische Polyisocyanate, wie sie z.B. von W. Siefgen in Justus Liebigs Annalen der Chemie, 562, Seiten 75 bis 136, beschrieben werden, beispielsweise Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (DAS 1 202 785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan- diisocyanat, sowie Carbodiimidgruppen, Allophanatgruppen, Isocyanuratgruppen, Urethangruppen, acylierte Harnstoffgruppen, Biuretgruppen (US-PS 3 124 605), Uretdiongruppen, Estergruppen,

Äthergruppen, Thioäthergruppen, Thioestergruppen enthaltende Diisocyanate bzw. Polyisocyanate, denen voranstehend erwähnte monomere Isocyanate zugrunde liegen. Erfindungsgemäß können auch Semiprepolymere und Prepolymere aus diesen Isocyanaten und Polyestern, Polyäthern, Polyesterpolyäthern, Thioäthern, Thioestern und Polythioätherpolythioestern eingesetzt werden. Ferner ist es möglich, beliebige Mischungen der vorgenannten Polyisocyanate einzusetzen.

1-Isocyanato-3,3,5-trimethyl-5-isocyanatomethyl-cyclohexan, 4,4'-Dicyclohexylmethandiisocyanat und/oder kernhydriertes Toluylendiisocyanat sowie ein flüssiges Umsetzungsprodukt von überschüssigen Mengen an 1-Isocyanato-3,3,5-trimethyl-5-isocyanato methyl-cyclohexan, 4,4'-Dicyclohexylmethandiisocyanat und/oder kernhydriertem Toluylendiisocyanat mit organischem Polyhydroxylverbindungen sind erfindungsgemäß bevorzugt.

Besonders bevorzugt beim erfindungsgemäßen Verfahren als Isocyanat-Komponente einzusetzen sind Umsetzungsprodukte von überschüssigen Mengen an 1-Isocyanato-3,3,5-trimethyl-5-isocyanatomethyl-cyclohexan (Isophorondiisocyanat) mit organischen Polyhydroxylverbindungen der nachstehend beispielhaft genannten Art im NCO/OH-Verhältnis von 2:1 bis 100:1, vorzugsweise 4:1 bis 16:1. Diese bevorzugt beim erfindungsgemäßen Verfahren einzusetzenden "quasi-Präpolymeren" mit endständigen Isocyanatgruppen weisen bei 20°C im allgemeinen eine Viskosität von 80 bis 5000, vorzugsweise 100 bis 2500, mPas und einen NCO-Gehalt von 10 bis 35 , vorzugsweise 24 bis 32 , Gew.-% auf.

Reaktionspartner für die Polyisocyanatkomponente sind beim erfindungsgemäßen Verfahren beliebige ethergruppenhaltige organische Verbindungen mit mindestens 2 Hydroxylgruppen des Molekulargewichtsbereichs 400 - 10000, vorzugsweise 1000-6000.

Die erfindungsgemäß in Frage kommenden, mindestens zwei, in der Regel zwei bis acht, vorzugsweise zwei bis vier, insbesondere zwei bis drei, Hydroxylgruppen aufweisenden Polyether sind solche der an sich bekannten Art und werden z.B. durch Polymerisation von Epoxiden wie Äthylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Alkohole oder Amine, z.B. Wasser, Äthylenglykol, Propylenglykol-(1,3) oder -(1,2), Trimethylolpropan, 4,4'-Dihydroxydiphenylpropan, Anilin, Ammoniak, Äthanolamin, Äthylendiamin hergestellt. Auch Succrosepolyäther, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol, Acrylnitril in Gegenwart von Polyether entstehen (amerikanische Patentschriften 3 383 351, 3 304 273, 3 523 093, 3 110 695, deutsche Patentschrift 1 152 536), sind ebenfalls geeignet.

Vertreter dieser erfindungsgemäß zu verwendenden Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199 sowie im Kunststoff-Handbuch, Band VII, Vieweg-Höchtlen, Carl-Hanser-Verlag, München, 1966, z.B. auf den Seiten 45 bis 71, beschrieben.

Die an sich bekannten Ethergruppen-freien Polyole wie Polyester, Polyacetale, Polycarbonate können anteilmäßig (bis zu 50 Gew.-%, bezogen auf den Polyether) mitverwendet werden.

Erfindungsgemäß werden neben den an sich bekannten Kettenverlängerern als Kettenverlängerer mono- und/oder dialkoxyliertes Hydrazin und/oder deren Umsetzungsprodukte mit aliphatischen oder cycloaliphatischen Monoisocyanaten (Molverhältnis 1:1) in Mengen von 0,1-10, vorzugsweise 1-5 Gew.-%, bezogen auf die Polyhydroxyverbindung vom Molekulargewicht 400-10000, verwendet. Zur Mono- oder Dialkoxylierung des Hydrazins werden die an sich bekannten Alkylenoxide wie Ethylenoxid, Propylenoxid, Butylenoxid, Tetrahydrofuran eingesetzt. Das Molverhältnis zwischen Alkylenoxid und Hydrazin beträgt 1:1 bis 2:1.

Als Beispiele für diese Kettenverlängerer seien genannt: Mono- und diethoxyliertes Hydrazin, mono- und dipropoxyliertes Hydrazin, Umsetzungsprodukte dieser Verbindungen mit Monoisocyanaten wie Methyl-, Ethyl-, Isopropyl-, Butyl-, Pentyl-, Hexyl-, Octyl- und/oder Stearylisocyanat (Molverhältnis 1:1). Bevorzugt sind

Umsetzungsprodukte des mono- oder dialkoxyliertem Hydrazins mit $C_1$-$C_{18}$-Alkylmonoisocyanaten.

Besonders bevorzugt ist Hydrazinethanol als Kettenverlängerer.

Als zusätzliche Kettenverlängerer werden die an sich bekannten Verbindungen mit mindestens zwei gegenüber Isocyanaten reaktionsfähigen Wasserstoffatomen und einem Molekulargewicht von 32 bis 400 mitverwendet. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf.

Selbstverständlich können Mischungen von verschiedenen Verbindungen mit mindestens zwei gegenüber Isocyanaten reaktionsfähigen Wasserstoffatomen mit einem Molekulargewicht von 32 bis 400 verwendet werden. Diese zusätzlichen, an sich bekannten Kettenverlängerer werden in Mengen von 0,1-10, vorzugsweise 1 bis 5 Gew.-%, bezogen auf die Polyhydroxylverbindung vom Molekulargewicht 400-10000, verwendet.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und

Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen ("Formose") bzw. die hieraus durch Reduktion erhaltenen mehrwertigen Alkohole ("Formit) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin

sowie deren Gemische, 1-Amino-3,3,5-trimethyl-5-aminomethylcyclohexan ("Isophorondiamin"), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731 ) und cycloaliphatische Triamine gemäß DE-Offenlegungsschrift 2 614 244. Auch Hydrazin und alkylsubstituierte Hydrazine, z.B. Methylhydrazin, N,N'-Dimethylhydrazin und deren Homologe sowie Säuredihydrazide kommen erfindungsgemäß in Betracht, z.B. Carbodihydrazid, Oxalsäuredihydrazid, die Dihydrazide von Malonsäure, Bernsteinsäure, Glutarsäure, Adipinsäure, ß-Methyladipinsäure, Sebazinsäure, hydracrylsäure und Terephthalsäure; Semicarbazido-alkylen-hydrazide wie z.B. ß-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Amino-semicarbazid-Verbindungen wie z.B. ß-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Kettenverlängerungsmittel können erfindungsgemäß auch Verbindungen wie 1-Mercapto-3-aminopropan, gegebenenfalls substituierte Aminosäuren, z.B. Glycin, Alanin, Valin, Serin und Lysin sowie gegebenenfalls substituierte Dicarbonsäuren, beispielsweise Bernsteinsäure, Adipinsäure, Phthalsäure, und 4-Hydroxyphthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

Erfindungsgemäß werden leicht flüchtige organische Substanzen als Treibmittel mitverwendet. Als organische Treibmittel kommen z.B. Aceton, Äthylacetat, halogensubstituierte Alkane wie Methylenchlorid, Äthylidenchlorid, Monofluortrichlormethan, Chlordifluormethan, Dichlordifluormethan, Trichlor-trifluoräthan, ferner Butan, Hexan, Heptan oder Diäthyläther in Frage. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden. Weitere Beispiele für Treibmittel sowie Einzelheiten über die Verwendung von Treibmitteln sind im Kunststoffhandbuch, Band VII, herausgegeben von Vieweg-Höchtlen, Carl-Hanser-Verlag, München 1966, z.B. auf den Seiten 108 und 109, 453 bis 455 und 507 bis 510 beschrieben.

Auch Wasser kann als chemisches Treibmittel mitverwendet werden.

Das erfindungsgemäße Verfahren wird bevorzugt in Gegenwart von beliebigen, Amidingruppierungen oder Imidazolgruppierungen aufweisenden organischen Verbindungen, gegebenenfalls gleichzeitig in Gegenwart von beliebigen an sich bekannten, die Isocyanat-Additionsreaktion

beschleunigenden organischen Metallkatalysatoren durchgeführt. Beide gleichzeitig beim erfindungsgemäßen Verfahren mitzuverwendende Katalysatoren werden vorzugsweise der Polyol-Komponente in einer Menge von jeweils 0,1 bis 5, vorzugsweise 0,5 bis 2,5 Gew.-%, bezogen auf die Polyolkomponente, zugemischt.

Zu den bevorzugten Amidinkatalysatoren gehören Verbindungen der Formel (I)

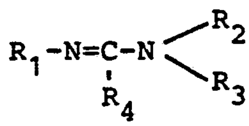

(I)

wobei

$R_1$, $R_2$ und $R_3$ gleiche oder verschiedene Reste bedeuten und für Wasserstoff, ein aliphatischer Kohlenwasserstoffrest mit 1 bis 18, vorzugsweise 1 bis 4 Kohlenstoffatomen, ein aromatischer Kohlenwasserstoffrest mit 6 bis 10 Kohlenstoffatomen, vorzugsweise einen Phenylrest, einen araliphatischen Kohlenwasserstoffrest mit 7 bis 10 Kohlenstoffatomen, vorzugsweise einen Benzylrest oder einen cycloaliphatischen Kohlenwasserstoffrest mit 5 bis 7 Kohlenstoffatomen, vorzugsweise ein Cyclohexylrest stehen und

$R_4$ einen Rest wie $R_1$ oder die Gruppierung $-N(R_2)(R_3)$ darstellt.

Beispiele für derartige Amidine sind N,N'-Dimethylformamidin, N,N'-Dimethylacetamidin, Trimethylacetamidin, N,N'-Dimethylformamidin, N-Benzyl-N,N'-dimethylacetamidin, N,N'-Dimethyl-N-äthylbenzamidin, N,N'-Dicyclohexyl-N-methylacet-

amidin, Triphenylbenzamidin, N,N'-Diphenyl-N'-methylbenzylamidin, Tetramethylguanidin, N,N'-Diphenyl-N,N'-dimethylguanidin oder Tetraphenylguanidin.

Die Darstellung derartiger Amidine ist zusammenfassend mit allgemeinen Arbeitsvorschriften und speziellen Beispielen beschrieben in Houben-Müller-Weyl, Methoden der Organischen Chemie, Band XI, 2, Seite 38 bis 66, Verlag G. Thieme, Stuttgart 1958.

Weitere bevorzugte Amidinkatalysatoren sind solche der Formel (II)

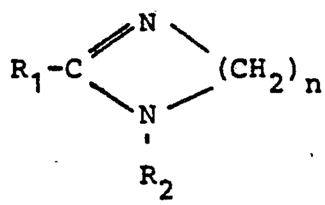

(II)

in welcher

$R_1$ und $R_2$ die genannten Bedeutungen haben und in der

n für eine ganze Zahl von 2 bis 4 steht.

Beispiele für derartige monocyclische Amidine sind 2,3-Dimethyl-3,4,5,6-tetrahydropyrimidin, N-Methyl-$\Delta$2-tetrahydropyrimidin, N-Cyclohexyl-2-methyl-$\Delta$2-tetrahydropyrimidin, N-Benzyl-2-butyl-$\Delta$2-tetrahydropyrimidin, 2-Methyl-$\Delta$2-imidazolin, 1,2-Diphenyl-2-imidazolin, 1-Methyl-$\Delta$4-1,2,4-triazolin und 1,5-Dibutyl-$\Delta$4-1,2,4-triazolin.

Die Darstellung derartiger cyclischer Amidine ist ebenfalls in Houben-Müller-Weyl, Methoden der Organischen Chemie, Band XI, 2, Seite 38 bis 66 beschrieben.

Weitere bevorzugt beim erfindungsgemäßen Verfahren einzusetzende Amidinkatalysatoren sind der solche der Formel (IV)

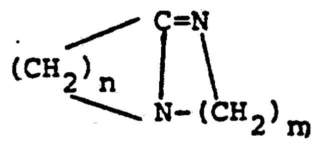

(IV)

wobei

n und m für gleiche oder verschiedene ganze Zahlen stehen und 2 bis 4 bedeuten.

Beispiele für derartige bicyclische Amidine sind 1,5-Diazabicyclo-(4,3,0)nonen-5, 1,5-Diazabicyclo(4,4,0)decen-5 oder 1,8-Diazabicyclo(5,3,0)undecen-7. Die Herstellung derartiger bicyclischer Verbindungen wurde beispielsweise in der DOS 1 545 855 beschrieben.

Die Amindine können bei der Durchführung des erfindungsgemäßen Verfahrens ganz oder teilweise durch Imidazolgruppen aufweisende Katalysatoren ersetzt werden. Zu den bevorzugten hierfür geeigneten Imidazolen gehören die Verbindungen der Formel (V)

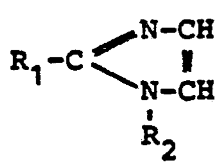

(V)

in welcher

$R_1$ und $R_2$ die bereits genannte Bedeutung haben.

Beispiele für derartige Imidazole sind N-Methylimidazol, N-Butylimidazol, 2,3-Dimethylimidazol. Die Darstellung derartiger Imidazolderivate wurde z.B. beschrieben von: v. Anwers und Mauss, Ber.dtsch.Chem.Ges. 61, 2415-2418 (1928).

Mit den Amidin-Imidazolkatalysatoren können gegebenenfalls beim erfindungsgemäßen Verfahren zusätzlich organische Metallkatalysatoren eingesetzt werden. Zu den bevorzugten organischen Metallkatalysatoren gehören insbesondere organische Zinnverbindungen, besonders bevorzugt Carboxylate des zwei- oder vierwertigen Zinns, wobei unter letzteren vorzugsweise Dialkyl-Zinn-Dicarboxylate zu verstehen sind. Zu den bevorzugten Verbindungen des zweiwertigen Zinns gehören Zinn(II)-carboxylate auf Basis von aliphatischen Monocarbonsäuren mit 2-18, vorzugsweise 8-12, Kohlenstoffatomen, z.B. Zinn(II)-acetat, Zinn(II)-octoat, Zinn(II)-äthylhexoat und Zinn(II)-laurat. Zu den bevorzugten Verbindungen des vierwertigen Zinns gehören insbesondere Dialkyl-Zinn(IV)-Dicarboxylate wie z.B. Dibutylzinn-diacetat, Dibutylzinndilaurat, Dibutylzinnmaleat oder Dioctylzinn-diacetat.

Die beispielhaft genannten Amidin- bzw. Inidazol-Katalysatoren können sowohl rein als auch als Metallkomplexe der Zinnsalze eingesetzt werden, wie sie in der DE-OS 2 434 185 beschrieben werden.

Selbstverständlich ist es auch möglich, zusätzlich zu den erfindungswesentlichen Katalysatorkombinationen weitere Katalysatoren einzusetzen, wie sie in der Polyurethanchemie zum Stand der Technik gehören und im Kunststoffhandbuch, Bd. VII, herausgegeben von Vieweg-Höchtlen, Carl-Hanser-Verlag, München 1966, z.B. auf den Seiten 96 bis 102 beschrieben werden.

Erfindungsgemäß können auch oberflächenaktive Zusatzstoffe (Emulgatoren und Schaumstabilisatoren) mitverwendet werden. Als Emulgatoren kommen z.B. die Natriumsalze von Ricinusölsulfonaten oder auch von Fettsäuren oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Als Schaumstabilisatoren kommen vor allem wasserlösliche Polyäthersiloxane in Frage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z.B. in der amerikanischen Patentschrift 2 764 565 beschrieben.

Erfindungsgemäß können ferner auch Reaktionsverzögerer, z.B. sauer reagierende Stoffe wie Salzsäure, Schwefelsäure, Phosphorsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chloräthylphosphat oder Ammoniumphosphat und -polyphosphat, ferner Stabilisatoren gegen Alterungs- und Witterungseinflüsse, Weichmacher und fungistatisch und bakteriostatisch wirkende Substanzen, Füllstoffe wie Bariumsulfat, Kieselgur, Ruß oder Schlämmkreide mitverwendet werden.

Weitere Beispiele von gegebenenfalls erfindungsgemäß mitzuverwenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Zur Durchführung des erfindungsgemäßen Verfahrens werden die Reaktionskomponenten nach dem an sich bekannten Einstufenverfahren, dem Präpolymerverfahren oder dem sogenannten Semiprepolymerverfahren zur Umsetzung gebracht, wobei man sich oft maschineller Einrichtungen bedient, z.B. solcher, die in der amerikanischen Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Durchführung des erfindungsgemäßen Verfahrens kommen die Reaktionspartner im übrigen vorzugsweise in solchen Mengen zum Einsatz, die einer "NCO-Kennzahl" von 90-120, vorzugsweise 100-110, entspricht, obwohl auch ein Arbeiten insbesondere oberhalb einer NCO-Kennzahl von 120

beispielsweise bei gleichzeitiger Mitverwendung von Trimerisierungskatalysatoren, beispielsweise von Alkaliacetaten, zwecks Trimerisierung der überschüssigen NCO-Gruppen unter Isocyanuratbildung möglich wäre. Diese letztgenannte Ausführungsform ist jedoch weniger bevorzugt. Unter "NCO-Kennzahl" ist in obigem Zusammenhang das Verhältnis der NCO-Gruppen zu allen im Reaktionsgemisch vorliegenden, gegenüber NCO-Gruppen reaktionsfähigen Gruppen zu verstehen. Eine NCO-Kennzahl von 100 bedeutet in diesem Zusammenhang das Vorliegen äquivalenter Mengen an NCO-Gruppen und gegenüber Isocyanatgruppen reaktionsfähigen Gruppen.

Die Schaumstoffherstellung erfolgt erfindungsgemäß bevorzugt durch Verschäumung in geschlossenen Formen. Dabei wird das Reaktionsgemisch in eine Form eingetragen. Als Formmaterial kommt Metall, z.B. Aluminium, oder Kunststoff, z.B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Bei der Formverschäumung werden vielfach an sich bekannte "äußere Trennmittel", wie Siliconöle, mitverwendet. Man kann aber auch sogenannte "innere Trennmittel", gegebenenfalls im Gemisch mit äußeren Trennmitteln, verwenden, wie sie z.B. aus den DE-Offenlegungsschriften 2 121 670 und 2 307 589 bekanntgeworden sind.

Die Verfahrensprodukte können in harter Einstellung zur Herstellung von Möbelteilen, Karosserieteilen von Fahrzeugen, technischen Geräten und Bauelementen Verwendung finden, sowie in halbharter bis weicher Einstellung zur Herstellung von Sicherheitspolsterungen im Automobilbau, elastischen Schuhsohlen, Stoßfängern usw.

Im folgenden sei das erfindungsgemäße Verfahren beispielhaft beschrieben. Die angegebenen Teile sind Gewichtsteile, sofern nicht anders vermerkt. Die Prozentangaben stellen Gewichtsprozente dar.

Beispiel 1

Die Polyolmischung besteht aus 65 Gew.-Tln. eines Polyethers der OH-Zahl 900, der durch Addition von Propylenoxid an Trimethylolpropan erhalten wurden, 70 Tln. eines trifunktionellen, auf Trimethylolpropan gestarteten Polyäthylenoxid-Polypropylenoxid-Polyetherpolyols der OH-Zahl 28, 1,4 Gew.-Tln. Hydrazinoethanol, 3 Gew.-Tln. eines Polysiloxan-Polyalkylenoxid-Blockcopolymerisats als Schaumstabilisator, 0,6 Gew.-Tln. Diazabicycloundecan, 0,4 Gew.-Tln. Dibutylzinn-(IV)-dilaurat und 10 Gew.-Tln. Monofluortrichlormethan als Treibmittel.

Das Polyisocyanat wird erhalten durch Präpolymerisierung von Trimethylolpropan mit Isophorondiisocyanat und besitzt eine NCO-Gehalt von 29,4 %. Die obige Polyolmischung wurde mit 130 Tln. des Polyisocyanats unter den üblichen Bedingungen der Formverschäumung zu einem harten Schaumstoff-Formkörper mit Integralstruktur und einem RG von 0,525 $g/cm^3$ verarbeitet. Die Startzeit beträgt 20 sec., die Abbindezeit 28 sec., die Entformungszeit 5 Min. Die Formbeständigkeit des Materials in der Wärme gemäß DIN 53 432 beträgt 95°C. Das Formteil wird im Weather-o-meter-Tets 500 h bewittert. Nach dieser Zeit in es farblich unverändert.

Beispiel 2 (Vergleich)

Analog dem Beispiel 1 wird ein Formteil hergestellt mit dem Unterschied, daß auf den Zusatz von Hydrazinoethanol verzichtet wird. Das Formteil wird ebenfalls im Weather-o-meter-Test 500 h bewittert. Nach dieser Zeit ist das Material zwar schwach, aber deutlich sichbar an den bewitterten Stellen vergilbt.

Beispiel 3

Die Polyolmischung besteht aus 168 g eines trifunktionellen, auf Trimethylolpropan gestarteten Polyethylenoxid-Polypropylenoxid-Polyetherpolyols der OH-Zahl 28, 25,2 g Butandiol-1,4, 4,2 g Trimethylolpropan, 2,2 g eines üblicherweise verwendeten Polysiloxan-Polyalkylenoxid-Schaumstabilisators, 0,7 g Diazobicycloundecen, 0,4 g Dibutylzinn-(IV)-dilaurat und 10 g Monofluortrichlormethan als Treibmittel.

Als Polyisocyanat wird das in Beispiel 1 beschriebene verwendet.

Auf dieser Grundlage wird eine Anzahl an sich identischer Integral-Schäume hergestellt, die sich durch ihren Anteil an Hydrazinoethanol voneinander unterscheiden. Alle Schäume werden anschließend 72 h bei 110°C getempert.

| | Polyolmischung+ Gew.-Tle. | Polyisocyanat Gew.-Tle. | Hydrazinoethanol Gew.-Tle | RG ($g/cm^3$) | Shore A |
|---|---|---|---|---|---|
| 1 | 200 | 105 | 0 | 0,650 | 75 |
| 2 | 200 | 105,7 | 0,19 | 0,645 | 75 |
| 3 | 200 | 108,5 | 0,95 | 0,660 | 80 |
| 4 | 200 | 112 | 1,9 | 0,650 | 78 |
| 5 | 200 | 119 | 3,8 | 0,580 | 79 |

+ ohne Berücksichtigung des Treibmittels

Nach Temperung:

| | Shore A | △ Shore A | Bemerkungen |
|---|---|---|---|
| 1. | ./. | ./. | Material beginnt bereits nach 32 h zu zerfließen, Deckschicht vollständig zerstört |
| 2. | ./. | ./. | Material beginnt nach 56 h zu zerfließen, Deckschicht teilweise zerstört |
| 3 | 70 | 10 | Schwache Vergilbung, Deckschicht intakt |
| 4 | 70 | 8 | kaum sichtbar Vergilbung |
| 5 | 75 | 4 | Material praktisch unverändert |

Beispiel 4 (Vergleich)

Die Polyolmischung besteht aus 100 Gew.-Tln. des auch in den vorstehenden Beispielen verwendeten Polyethers 10,5 Gew.-Tln. Ethylenglykol, 2,5 Gew.-Tln. Trimethylolpropan, 1,3 Gew.-Tln. Stabilisator, 0,4 Gew.-Tln. Diazabicycloundecen, 0,56 Gew.-Tln. Dibutylzinn-(IV)-dilaurat und 6 Gew.-Tln. Monofluortrichlormethan.

Als Polyisocyanat wird wieder das in Beispiel 1 beschriebene verwendet. Aus beiden Komponenten wird in üblicher Weise in Integral-Formschaumstoff hergestellt (RG 0,560 g/$cm^3$).

Proben davon werden auf ihre Thermooxidationsbeständigkeit und ihre UV-Beständigkeit untersucht. Dabei zeigte sich, daß das Material bereits nach 32 h Lagerung bei 110°C vollständig zerstört ist und nach 100 h Xenon-Test wegzufließen beginnt.

Beispiel 5

Analog Beispiel 4 wurde ein Integralschaumstoff hergestellt (RG 0,640 g/cm$^3$), der 0,6 Gew.-% Hydrazinoethanol eingebaut enthielt. Das Material läßt sich wie auch schon im Beispiel 3 ohne allzu große Veränderung 72 h bei 110°C lagern, ist also ausreichend thermooxidationstabil, und auch nach 500 h Weather-o-meter-Test unverändert.

Beispiel 6 (Vergleich)

100 Gew.-Tle eines trifunktionellen Polyetherpolyols der OH-Zahl 45, 7 Gew.-Tle. Trimethylolpropan und 3 Gew.-Tle. Wasser werden in Gegenwart von 0,2 Gew.-Tln. Dimethyltetrahydropyrimidin und 0,2 Gew.-Tln. Zinn-(II)-dioctoat als Aktivator und 1 Gew.-Tl. eines üblichen siliciumhaltigen Weichschaumstabilisators mit Isophorondiisocyanat zu einem Weichschaum verarbeitet (NCO/OH = 1,05). Der Schaumstoff ist nach 24 h bei 130°C stark versprödet und teilweise verfärbt. Eine andere Probe des Schaumstoffs wurde einem Xenon-Test unterworfen. Nach 100 h zeigte auch die UV-bestrahlte Probe starke Oberflächenversprödung.

Beispiel 7

Gemäß Beispiel 6 wurde ein Schaumstoff hergestellt, der zusätzlich 2 Gew.-Tle. Hydrazinoethanol eingebaut enthielt. Er zeigte nach 24 h bei 130°C weder oberflächliche Versprödung noch Verfärbung. Nach 100 h bzw. auch 125 h Xenon-Rest war keine Oberflächenveränderung feststellbar.

Beispiel 8

Gemäß Beispiel 6 wurde ein Schaumstoff hergestellt, der zusätzlich 2 Gew.-Tle. eines Umsetzungsproduktes aus Hydrazinethanol und Isopropylisocyanat (Molverhältnis 1:1) enthielt. Der Schaumstoff wurde den bereits angeführten Thermooxidations- und Xenon-Tests unterworfen. Er ist geringfügig weniger stabil als der mit Hydrazinoethanol stabilisierte, aber deutlich besser als der unstabilisierte.

Patentansprüche

1. Verfahren zur Herstellung von Polyurethan-Schaumstoffen durch Umsetzung von Polyisocyanaten mit Polyhydroxylverbindungen vom Molekulargewicht 400 bis 10000 in Gegenwart von Treibmitteln und Kettenverlängerern vom Molekulargewicht 32 bis 400, sowie gegebenenfalls in Gegenwart von Aktivatoren, Schaumstabilisatoren und weiteren an sich bekannten Hilfs- und Zusatzstoffen, dadurch gekennzeichnet, daß als Polyisocyanate solche mit aliphatisch und/oder cycloaliphatisch gebundenen Isocyanatgruppen, als Polyhydroxylverbindungen vom Molekulargewicht 400 - 10000 ethergruppenhaltige Polyole und als Kettenverlängerer neben den an sich bekannten Kettenverlängerern mono- und/oder dialkoxyliertes Hydrazin und/oder Umsetzungsprodukte von mono- und/oder dialkoxyliertem Hydrazin mit aliphatischen Monoisocyanaten im Molverhältnis 1:1 eingesetzt werden.

2. Verfahren nach Anspruch 1, dadurch gekennzeichnet, daß als monoalkoxyliertes Hydrazin Hydrazinethanol eingesetzt wird.

3. Verfahren nach Anspruch 1, dadurch gekennzeichnet, daß als Kettenverlängerer ein Umsetzungsprodukt von einem $C_1$-$C_{18}$-Alkylmonoisocyanat und Hydrazinoethanol im Molverhältnis 1:1 eingesetzt wird.

4. Verfahren nach Anspruch 1 und 3, dadurch gekennzeichnet, daß als Kettenverlängerer ein Umsetzungsprodukt von Ethyl-, Isopropyl- und/oder n-Butylisocyanat und Hydrazinethanol verwendet wird.

5. Verfahren nach Anspruch 1 - 4, dadurch gekennzeichnet, daß man den Kettenverlängerer in einer Menge von 0,1-10 Gew.-%, bezogen auf die Polyhydroxylverbindungen von Molekulargewicht 400-10000, verwendet.

6. Verfahren nach Anspruch 1-5, dadurch gekennzeichnet, daß man als Polyisocyanate 1-Isocyanato-3,3,5,5-trimethyl-5-isocyanatomethyl-cyclohexan, 4,4'-Dicyclohexylmethandiisocyanat und/oder kernhydriertes Toluylendiisocyanat einsetzt.

7. Verfahren nach Anspruch 1-6, dadurch gekennzeichnet, daß als Polyisocyanat ein flüssiges Umsetzungsprodukt von überschüssigen Mengen an 1-Isocyanato-3,3,5,5-trimethyl-5-isocyanato-methyl-cyclohexan, 4,4'-Dicyclohexylmethandiisocyanat und/oder kernhydriertem Toluylendiisocyanat mit organischen Polyhydroxylverbindungen eingesetzt wird.

8. Verfahren nach Anspruch 1-7, dadurch gekennzeichnet, daß die Umsetzung in Gegenwart von Amidingruppierungen oder Imidazolgruppierungen aufweisenden organischen Verbindungen als Katalysatoren durchgeführt wird.

9. Verfahren nach Anspruch 1-8, dadurch gekennzeichnet, daß die Schaumstoffherstellung in geschlossenen Formen unter Ausbildung eines Integralschaumstoffs erfolgt.

Europäisches Patentamt

# EUROPÄISCHER RECHERCHENBERICHT

0017804

Nummer der Anmeldung

EP 80 10 1554.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 2 303 804 (BAYER)<br>* Beispiele 18, 19 *<br>-- | 1,2 |
| X | Chemical Abstracts Band 77, 1972<br>Columbus, Ohio, USA<br>V.V. SHEVCHENKO et al. "Polyureylenes and polyurethane ureylenes based on alkylhydrazines and their derivatives"<br>Seiten 72 bis 73, Abstract Nr, 35907t<br>& Sin. Fiz.-Khim. Polim., Nr. 8, 1971, Seiten 54 bis 57 (Russ)<br>-- | 1,2 |
| X | Chemical Abstracts Band 78, 1973<br>Columbus, Ohio, USA<br>V.V. SHEVCHENKO et al. "N-substituted polyurethane ureylenes"<br>Seite 7, linke Spalte, Abstract Nr. 72694n<br>& Sin. Fiz.-Khim. Polim., Nr. 10, 1972, Seiten 3 bis 8 (Russ)<br>-- | 1,2 |
| | Chemical Abstracts Band 88, 1978<br>Columbus, Ohio, USA<br>H. MAKI et al. "Urethane polymers having good light resistance"<br>Abstract Nr. 106231h<br>& JP - A - 77 - 87452<br>-- | 1,2 |
| | ./.. | |

**KLASSIFIKATION DER ANMELDUNG (Int.Cl.3)**

C 08 G 18/38
C 08 G 18/20
C 03 G 18/66
C 08 G 18/75

**RECHERCHIERTE SACHGEBIETE (Int. Cl.3)**

C 08 G 18/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 08-07-1980 | KRAIL |

EPA form 1503.1 06.78

Europäisches Patentamt

**EUROPÄISCHER RECHERCHENBERICHT**

0017804 Nummer der Anmeldung

EP 80 10 1554.6
- Seite 2 -

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| A | DE - A - 2 221 750 (BAYER)<br>* Seite 5, Absatz 4 *<br>-- | | |
| D,A | DE - A1 - 2 710 901 (S.A. PRB)<br>---- | | |
| | | | RECHERCHIERTE SACHGEBIETE (Int. Cl.3) |